# EUROPÄISCHE PATENTSCHRIFT

(11) **EP 1 565 359 B1**
(45) Veröffentlichungstag und Bekanntmachung des Hinweises auf die Patenterteilung: **20.02.2008**
(21) Anmeldenummer: 03780020.8
(22) Anmeldetag: 21.11.2003
(51) Int. Cl.: B60S 1/38, B60S 1/40

(54) **VORRICHTUNG ZUM LÖSBAREN VERBINDEN EINES WISCHBLATTS MIT EINEM ANTREIBBAREN WISCHARM**
DEVICE FOR DETACHABLY LINKING A WIPER BLADE WITH A DRIVEN WIPER ARM
DISPOSITIF POUR RACCORDER DE MANIERE AMOVIBLE UN BALAI D'ESSUIE-GLACE ET UN BRAS D'ESSUIE-GLACE COMMANDABLE

(30) Priorität: 26.11.2002 DE 10254978; 27.05.2003 DE 10323997
(43) Veröffentlichungstag der Anmeldung: 24.08.2005
(73) Patentinhaber: Valeo Wischersysteme GmbH, 74321 Bietigheim-Bissingen (DE)
(72) Erfinder: FINK, Andreas, 71723 Grossbottwar (DE); SCHOLL, Wolfgang, 74376 Gemmrigheim (DE); SCHREMMER, Gerhard, 74321 Bietigheim-Bissingen (DE)
(74) Vertreter: Jahn, Wolf-Diethart
(86) Internationale Anmeldenummer: PCT/EP2003/013062
(87) Internationale Veröffentlichungsnummer: WO 2004/048163

(56) Entgegenhaltungen:
- WO-A-02/40328
- WO-A-03/080409
- WO-A-03/084789
- DE-A- 19 952 054

## Beschreibung

Die Erfindung betrifft eine Vorrichtung und ein Verfahren zum lösbaren Verbinden eines Wischblatts mit einem antreibbaren Wischarm, wobei das Wischblatt eine der zu wischenden Scheibe zugewandte Wischleiste, wenigstens ein bandartig langgestrecktes Trageelement, ein mit dem Trageelement verbundenes Reiterelement und ein an dem Reiterelement pendelbar gelagertes Verbindungselement zum Anschließen an einen Kopplungsabschnitt des Wischarms umfasst.

Eine derartige Vorrichtung ist beispielsweise aus der WO 02/40328 A1 bekannt geworden. Die dort beschriebene Vorrichtung, mit der ein Flachwischblatt an den Kopplungsabschnitt angebunden werden kann, weist eine Reihe von komplexen und aufwändig herstellbaren Bauteilen auf. Zudem ist der Anschließvorgang des Kopplungsabschnitts des Wischarms an das Verbindungselement des Wischblatts relativ komplex und erfordert eine gewisse Geschicklichkeit.

Der vorliegenden Erfindung liegt deshalb die Aufgabe zugrunde, eine Vorrichtung zum lösbaren Verbinden eines Wischblatt mit einem antreibbaren Wischarm vorzuschlagen, bei der der Anschließvorgang des Verbindungselements an den Kopplungsabschnitt auf einfache Art und Weise durchgeführt werden kann. Außerdem soll gewährleistet werden, dass der Kopplungsabschnitt dauerhaft sicher mit dem Verbindungsabschnitt gefügt ist, wobei ein Lösen des Wischblatts vom Wischarm dennoch einfach durchgeführt werden kann.

Diese Aufgabe wird mit einer Vorrichtung der eingangs beschriebenen Art erfindungsgemäß dadurch gelöst, dass der Kopplungsabschnitt einen zungenartigen Einführabschnitt aufweist, dass das Verbindungselement eine Aufnahme für den Einführabschnitt aufweist und dass der Kopplungsabschnitt und das Verbindungselement Sicherungsabschnitte zur gegenseitigen dauerhaften Verbindung aufweisen, wobei zur Erreichung einer Vormontageposition, in der die Längsachse des Wischarms und die Längsachse des Verbindungselements einen Winkel α im Bereich von ca. 10° bis 100° einschließen, der Einführabschnitt weitgehend geradlinig in die Aufnahme einführbar ist, und wobei zur Erreichung einer Endmontageposition der Wischarm und der Verbindungsabschnitt um den Kontaktbereich Einführabschnitt/Aufnahme aufeinander zu verschwenkbar sind, bis die Sicherungsabschnitte eine gegenseitige dauerhafte Verbindung ermöglichen.

Die Erfindung hat den Vorteil, dass zur Anbindung des Wischblatts an den Wischarm lediglich zwei einfach nachvollziehbare Schritte erforderlich sind, nämlich zum einen ein geradliniges Einführen des Einführabschnitts in die am Verbindungselement vorgesehene Aufnahme und ein Aufeinander-zu-Verschwenken des Kopplungsabschnitts, beziehungsweise des Wischarms, und des Verbindungselements. Zudem hat eine derartige Vorrichtung den Vorteil, dass sie sehr flach und sehr schlank baut. Zum einen werden hierdurch Windgeräusche minimiert. Zum anderen wird die Sicht des Fahrzeuglenkers durch das Wischblatt und den Wischarm nur geringfügig beeinträchtigt. Ferner findet die Krafteinleitung vorzugsweise über der Längsachse des Wischblatts, weitgehend lotrecht zur wischenden Scheibe statt, wodurch das Auftreten von Kippmomenten unterbunden wird.

Vorzugsweise liegt die Einführrichtung zur Erreichung der Vormontageposition in der Schwenkebene zur Erreichung der Endmontageposition. Dies hat den Vorteil, dass beide Bewegungen innerhalb einer Ebene liegen, wodurch der Montagevorgang vereinfacht wird.

Eine Ausführungsform der Erfindung zeichnet sich dadurch aus, dass der Kopplungsabschnitt im Querschnitt U-förmig ausgebildet ist und einen Rücken und zwei Schenkel umfasst, wobei der Einführabschnitt hakenartig ausgebildet und am Rücken des Kopplungsabschnitts freistehend angeordnet ist.

Der im Querschnitt U-förmig ausgebildete Kopplungsabschnitt übergreift in der Endmontageposition vorteilhafterweise das Verbindungselement wenigstens abschnittsweise. Hierdurch können auf das Verbindungselement wirkende Querkräfte von den Schenkeln des Kopplungsabschnitts aufgenommen werden.

Der Einführabschnitt ist vorteilhafterweise derart ausgebildet, dass er am freien Ende, in Richtung der Verlängerung des Wischarms und in Seitenrichtung in Richtung der zu wischenden Scheibe derart bogenartig ausgebildet ist, dass er den Rücken nicht überragt. Dies hat den Vorteil, dass der Einführabschnitt in der Endmontageposition nicht störend über den Rücken des Kopplungsabschnitts ragt. Bei entsprechend ausgebildetem Verbindungselement ist der Einführabschnitt in der Endmontageposition nicht sichtbar.

Dabei ist vorteilhaft, wenn der mit dem Einführabschnitt zusammenwirkende, an die Einführöffnung angrenzende, Bereich des Verbindungselements komplementär zum Einführabschnitt ausgebildet ist. Hierdurch kann in der Endmontageposition gewährleistet werden, dass der Einführabschnitt sicher am komplementär ausgebildeten Bereich des Verbindungselements anliegt.

Eine weitere Ausführungsform der Erfindung ergibt sich dann, wenn der mit dem Einführabschnitt zusammenwirkende Bereich des Verbindungselements und des Einführabschnitts im Längsschnitt bogenartig, und insbesondere kreissegmentartig, ausgebildet sind. Beim Aufeinander-Zu-Schwenken des Kopplungsabschnitts und des Verbindungselements in die Endmontageposition wird hierbei gewährleistet, dass der Einführabschnitt während der Schwenkbewegung großflächig an dem mit dem Einführabschnitt zusammenwirkenden Bereich des Verbindungselements anliegt. Hierdurch wird eine sichere Führung beim Montieren der Vorrichtung von der Vormontageposition in die Endmontageposition gewährleistet. Aufgrund der großflächigen Anlage werden Spannungsspitzen vermieden.

Eine weitere Ausführungsform ergibt sich dann, wenn das Verbindungselement im Querschnitt U-förmig ausgebildet ist und einen Rücken und zwei Schenkel umfasst. Aufgrund der U-förmigen Ausbildung des Verbindungselements kann erreicht werden, dass ein der zu wischenden Scheibe abgewandter Spoilerabschnitt der Wischleiste zwischen den beiden Schenkeln des Verbindungselements sich in Längsrichtung des Wischblatts erstrecken kann. Ferner kann das Verbindungselement an den Schenkeln vorteilhafterweise mit dem Reiter gekoppelt sein.

Vorteilhafterweise ist die Einführöffnung als Aussparung am Rücken ausgebildet. Dies hat den Vorteil, dass die Einführöffnung in der Draufsicht auf das Wischblatt deutlich zu sehen ist, wodurch das Einführen des Einführabschnitts in die Einführöffnung vereinfacht wird.

Erfindungsgemäß ist ferner denkbar, dass in der Endmontageposition der Kopplungsabschnitt das Verbindungselement wenigstens abschnittweise abdeckt. In am Wischarm montierten Zustand liegen dann vorzugsweise die Innenseiten der Schenkel des U-förmig ausgebildeten Kopplungsabschnitts an den Außenseiten der Schenkel des U-förmig ausgebildeten Verbindungselements an. Die Außenseite des Rückens des Verbindungselements liegt vorzugsweise an der Innenseite des Rückens des Kopplungsabschnitts an.

Eine weitere, vorteilhafte Ausführungsform der Erfindung ergibt sich dann, wenn die Sicherungsabschnitte als Rastabschnitte ausgebildet sind. Beim Aufeinander-Zu-Schwenken des Kopplungsabschnitts und des Verbindungselements verrasten die Rastabschnitte vorteilhafterweise in der Endmontageposition miteinander.

Dabei kann vorgesehen sein, dass das Verbindungselement auf seiner in Längsrichtung der Einführöffnung abgewandten Seite an den Schenkeln jeweils eine sich in Längsrichtung erstreckende, in Querrichtung elastisch nachgiebige, Rastzunge aufweist, die mit an den Schenkeln des Kopplungsabschnitts vorgesehenen Rastkanten zusammenwirken.

Um eine sichere Verrastung zu gewährleisten, kann vorteilhafterweise vorgesehen sein, dass die Rastkanten der Rastzungen und die Rastkanten der Schenkel mit der Längsachse des Wischblatts in der Endmontageposition einen spitzen Winkel, insbesondere einen Winkel im Bereich von 30° bis 80°, einschließen.

Zum Lösen der Rastverbindung, und damit zum Lösen des Wischblatts vom Wischarm, kann bei einer weiteren Ausführungsform der Erfindung vorgesehen sein, dass an den freien Enden der Rastzungen Betätigungsabschnitte vorgesehen sind. Die Betätigungsabschnitte sind dabei so ausgebildet, dass ein aufeinander zu gerichtetes Zusammendrücken der Rastzungen möglich ist, wodurch die Rastkanten der Rastzungen aus dem Eingriff mit den Rastkanten an den Schenkeln des Kopplungsabschnitts gelangen können.

Um eine leichtere Verrastung zu ermöglichen, ist vorteilhafterweise vorgesehen, dass die dem Rücken des Kopplungsabschnitts zugewandten Seiten der Rastzungen, die beim Verschwenken in die Endmontageposition auf die Schenkel des Kopplungsabschnitts treffen, angeschrägt sind.

Ebenfalls zu einer leichteren Verrastung trägt bei, wenn die der Scheibe zugewandten Seiten der Schenkel des Kopplungsabschnitts, auf die die ihnen zugewandten Seiten der Rastabschnitte beim Verschwenken in die Endmontageposition treffen, angeschrägt sind. Kurz vor Erreichen der Endmontageposition wirken folglich die angeschrägten Seiten der Rastzungen mit den angeschrägten Seiten der Schenkel des Kopplungsabschnitts derart zusammen, dass die Rastzungen in einander zugewandten Richtungen ausgelenkt werden. In der Endmontageposition hinterschnappen die Rastzungen in einander abgewandten Richtungen die Rastkanten des Kopplungsabschnitts.

Um eine verkehrte Anordnung eines Wischblatts an einem Wischarm zu verhindern kann der Kopplungsabschnitt eine entsprechende Codierung vorsehen. Eine falsche Montage des Wischblatts, beispielsweise am falschen Wischarm, wird hierdurch unterbunden. Eine Codierung kann beispielsweise durch eine entsprechende Anfasung am Kopplungsabschnitt und durch einen entsprechenden, mit der Anfasung zusammenwirkenden, Steg am Verbindungselement realisiert werden.

Eine weitere vorteilhafte Ausführungsform der Erfindung ergibt sich dann, wenn die Schenkel des Verbindungselements als doppelwandige, in Querrichtung leicht elastisch nachgiebige, Schenkel ausgebildet sind. Derartige doppelwandige Schenkel weisen ein besseres Reibverhalten gegenüber dem Reiterelement, gegen das sie verschwenkbar angeordnet sind, auf.

Vorteilhafterweise weist das Verbindungselement zwischen den Schenkeln einen Gelenkbolzen auf, der zur pendelbaren Anordnung des Verbindungselements in einer Lagerung am Reiterelement gelagert ist.

Eine andere Ausführungsform der Erfindung sieht vor, dass das Reiterelement einen mit seinen Enden von dem Reiterelement abragenden Lagerbolzen bzw. alternativ dazu zwei Gelenkzapfen aufweist, auf denen das Verbindungselement mit korrespondierenden und fluchtend angeordneten, in seinen Schenkeln befindlichen Lagerbohrungen verschwenkbar gelagert ist. In diesem Fall ist der Lagerbolzen bzw. sind die Lagerzapfen drehfest mit dem Reiterelement verbunden, und das Verbindungselement ist drehbar bzw. verschwenkbar an dem Reiterelement gelagert. Bei einem Wischblattwechsel wird also die gesamte Lagervorrichtung mit ausgetauscht.

Die in den Schenkeln des Verbindungselementes vorgesehenen Lagerbohrungen sind gemäß einer Weiterbildung der Erfindung jeweils über einen radial zu der Lagerbohrung verlaufenden Schlitz zum Rand hin geöffnet. Diese kann vorteilhaft für eine Vereinfachung der Montage der Einzelteile ausgenutzt werden.

Wenn jeweils der Schlitz entsprechend einer weiteren Ausführungsform von der Lagerbohrung ausgehend zu dem Rand des Schenkels verläuft, welcher dem Rücken des Verbindungselements gegenüber liegt, ist die Gefahr des unerwünschten Herausgleitens des Lagerbolzens bzw. Lagerzapfens aus der Lagerbohrung gering.

Eine weitere vorteilhafte Ausführungsform sieht vor, dass sich jeweils der Schlitz ausgehend von der Lagerbohrung zum Rand des Schenkels hin erweitert, wobei die engste Stelle des Schlitzes kleiner ist als der Durchmesser des Lagerbolzens bzw. der alternativen Lagerzapfen. Diese Ausführung bietet eine Vereinfachung der Montage bzw. Demontage. Durch den Schlitz kann der Lagerbolzen bzw. Lagerzapfen einfach unter Überwindung der Engstelle radial in der Art einer Rastverbindung eingepresst werden. Ebenso kann der Lagerbolzen bzw. Lagerzapfen in umgekehrter Richtung ebenfalls unter Überwindung der Engstelle entfernt werden. Hierzu kann es erforderlich sein, dass das Verbindungselement aus einem geeigneten Kunststoffmaterial besteht, welches ein Überwinden der Engstelle des Schlitzes durch den Lagerbolzen bzw. Lagerzapfen zulässt. Das Reiterelement und oder der Lagerbolzen bzw. die Lagerzapfen können aus Metall oder ebenfalls aus einem geeigneten Kunststoffmaterial bestehen.

Eine weitere, vorteilhafte Ausführungsform der Erfindung sieht vor, dass die Schenkel des Verbindungselements auf der der Scheibe zugewandten Seite nasenartige Erhebungen aufweisen. Diese Erhebungen dienen zur Abstützung an entweder dem Wischgummi oder dem Trageelement, wodurch ein erleichtertes Montieren beziehungsweise Demontieren des Wischblatts ermöglicht wird.

Der Kopplungsabschnitt und das Verbindungselement sind vorzugsweise so ausgebildet, dass sie in der Endmontageposition eine weitgehend geschlossene und weitgehend glatte Oberfläche aufweisen. Dazu können die Abschnitte des Verbindungselements, die von dem Kopplungsabschnitt überdeckt werden, um die Wandstärke des Kopplungsabschnitts tiefer liegen als die Abschnitte des Verbindungselements, die in der Endmontageposition sichtbar sind.

Um das aerodynamische Verhalten der Kombination Wischarm-Wischblatt, insbesondere bei höheren Fahrgeschwindigkeiten bzw. Luftanströmgeschwindigkeiten, zu verbessern und dabei insbesondere dem bekannten Effekt des Abhebens des mit dem Wischarm verbundenen Wischblattes von der zu reinigenden Scheibe entgegenzuwirken, sind weitere vorteilhafte Ausgestaltungen vorgesehen.

Durch die Maßnahme, dass der Kopplungsabschnitt des Wischarmes wenigstens eine zur Luftdurchströmung geeignete Öffnung aufweist, wird ein unterhalb des U-Profiles des Kopplungsabschnittes entstehender Staudruck weitgehend abgebaut. Dadurch wird die Abhebekraft am Wischarm verringert.

Besonders vorteilhaft ist hierbei, die wenigstens eine Öffnung im Rücken des Kopplungsabschnittes vorzusehen. Allerdings ist auch eine Verbesserung möglich, wenn in den Schenkeln des Kopplungselementes, insbesondere in dem lee-seitigen Schenkel eine oder mehrere Durchström-Öffnungen plaziert werden. Die maximale Wirkung ist hierbei wahrscheinlich durch eine Kombination der einzelnen Möglichkeiten zu erreichen.

Eine andere Ausführungsform sieht vor, dass an dem Kopplungsabschnitt des Wischarmes wenigstens ein spoilerartiges Luftleitmittel vorgesehen ist. Damit kann die anströmende Luft so geleitet werden, dass dem Effekt des Abhebens des Wischblattes bzw. des Wischarmes von der Scheibe entgegengewirkt wird. Vorteilhaft ist in diesem Zusammenhang, das wenigstens eine Luftleitmittel am Rücken des Kopplungsabschnittes anzuordnen. An diesem Ort wirkt ein Spoiler besonders effektiv.

Die Vorteile einer Ausführung, wonach das Luftleitmittel von einem aus dem Rücken des Kopplungsabschnittes freigeschnittenen und spoilerartig nach oben gebogenen Abschnitt gebildet ist, ist in der Kombination der Wirkungen des Spoilers und der so gebildeten Durchströmöffnung zu sehen. Es wird also direkt die Anpresskraft erhöht und gleichzeitig der Staudruck im Inneren des Kopplungsabschnittes verringert. Außerdem ist ein so hergestelltes Luftleimittel besonders kostengünstig.

Eine weitere vorteilhafte Ausführung sieht vor, dass am Rücken des Verbindungselementes wenigstens ein, vorzugsweise einstückig mit dem Verbindungselement hergestelltes, spoilerartiges Luftleitmittel angeordnet ist und dass dieses wenigstens eine Luftleitmittel durch eine, vorzugsweise korrespondierende, Öffnung im Rücken des Kopplungsabschnittes hindurchragt. Da das Verbindungselement vorteilhaft aus Kunststoffmaterial gefertigt ist, sind sehr viele gestalterische Möglichkeiten für die Form des spoilerartigen Luftleitmittels im Hinblick auf besonders günstige strömungstechnische Eigenschaften gegeben.

Die eingangs genannte Aufgabe wird auch gelöst durch ein Verfahren zur Montage einer erfindungsgemäßen Vorrichtung, das sich dadurch auszeichnet, dass zur Erreichung einer Vormontageposition, in der die Längsachse des Wischarms und die Längsachse des Verbindungselements einen Winkel α im Bereich von ca. 10° bis 100° einschließen, der Einführabschnitt weitgehend geradlinig in die Aufnahme eingeführt wird, und dass zur Erreichung einer Endmontageposition der Wischarm und der Verbindungsabschnitt um den Kontaktbereich Einführabschnitt/Aufnahme aufeinander zu verschwenkt werden, bis die Sicherungsabschnitte eine gegenseitige dauerhafte Verbindung eingehen.

Weitere Vorteile und Einzelheiten der Erfindung sind der folgenden Beschreibung zu entnehmen, in der die Erfindung anhand der in der Zeichnung dargestellten Ausführungsbeispiele näher beschrieben und erläutert ist.

Es zeigen:
- Figur 1: eine erfindungsgemäße Vorrichtung in perspektivischer Ansicht;
- Figur 2: die Vorrichtung gemäß Figur 1 ohne Wischarm;
- Figur 3: einen Teilschnitt durch die Figur 2;
- Figur 4: eine Unteransicht des in der Figur 1 dargestellten Kopplungsabschnitts;
- Figur 5: einen Teilschnitt durch die Vorrichtung gemäß Figur 1 in einer Vormontageposition;
- Figur 6: einen Teilschnitt durch die Vorrichtung gemäß Figur 5 in der Endmontageposition;
- Figur 7: eine andere Ausführung einer erfindungsgemäßen Vorrichtung in perspektivischer Ansicht;
- Figur 8: eine weitere Ausführung einer erfindungsgemäßen Vorrichtung in perspektivischer Ansicht;
- Figur 9: eine letzte Ausführung einer erfindungsgemäßen Vorrichtung in perspektivischer Ansicht;
- Figur 10: die Vorrichtung gemäß Figur 9 ohne Wischarm; und
- Figur 11: eine andere Ausführung einer erfindungsgemäßen Vorrichtung ohne Wischarm.

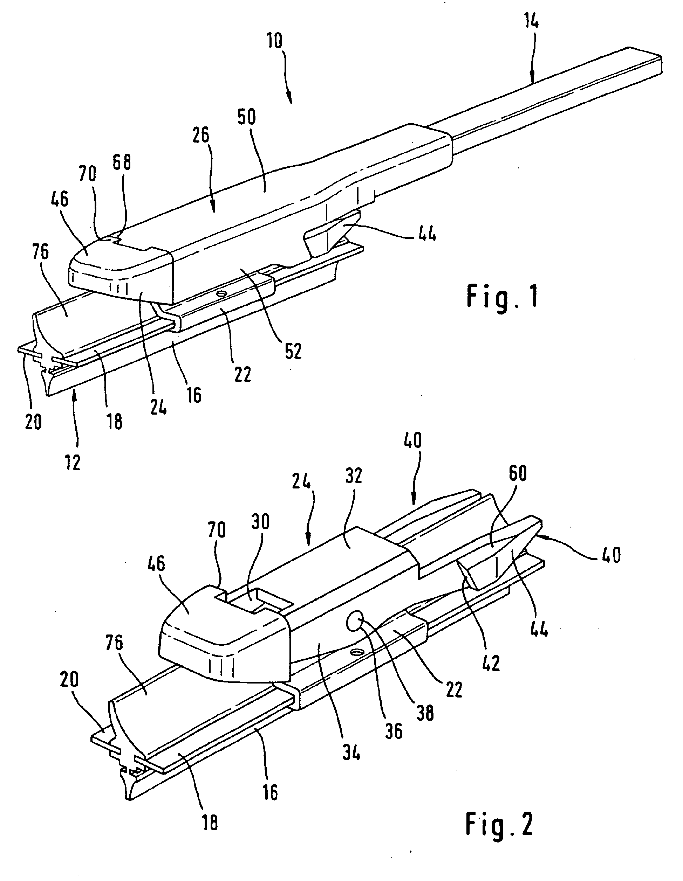

In der Figur 1 ist eine erfindungsgemäße Vorrichtung 10 zum lösbaren Verbinden eines Wischblatts 12, das ausschnittsweise dargestellt ist, mit einem antreibbaren Wischarm 14, der ebenfalls ausschnittsweise dargestellt ist, gezeigt. Das Wischblatt 12 weist eine der zu wischenden, nicht dargestellten, Scheibe zugewandte Wischleiste 16 auf, die zwei bandartig langgestreckte Trageelemente 18, 20, ein mit den Trageelementen 18, 20 verbundenes Reiterelement 22 und ein an dem Reiterelement 22 pendelbar angeordnetes Verbindungselement 24 umfasst. Das Verbindungselement 24 dient zum Anschließen an einen Kopplungsabschnitt 26 am Wischarm 14.

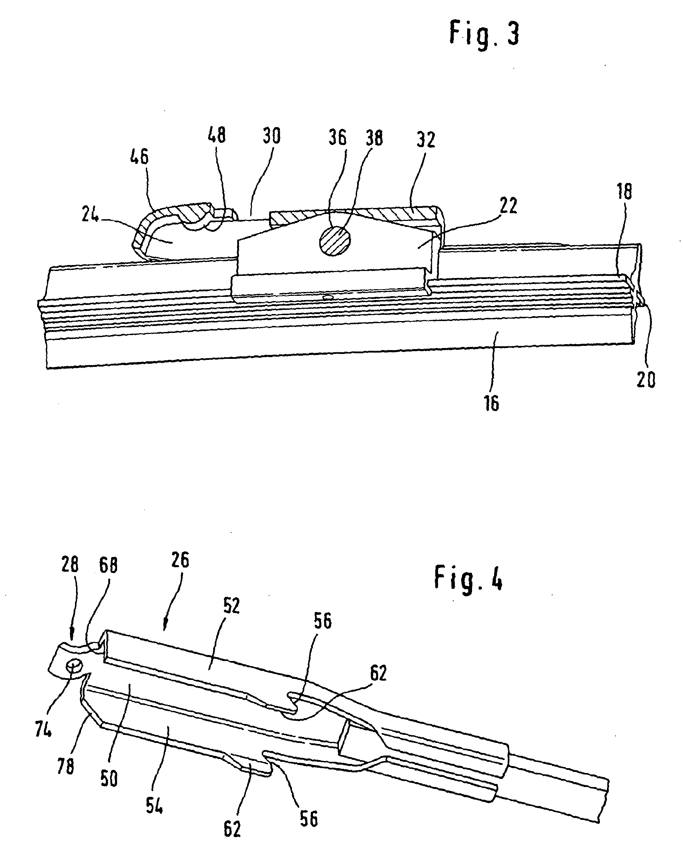

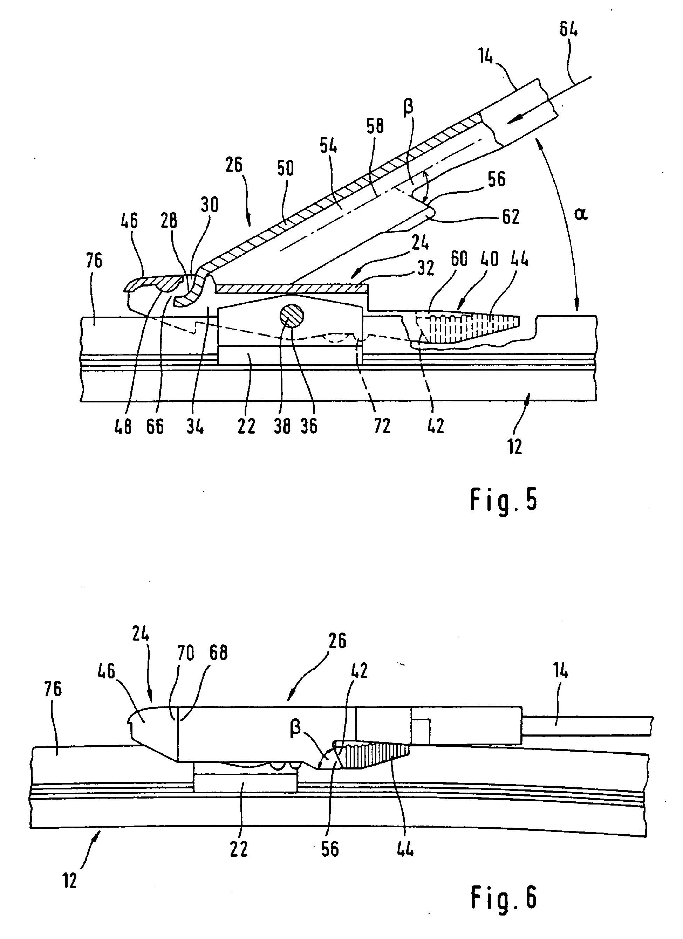

Der Kopplungsabschnitt 26 weist, wie insbesondere aus Figur 4 deutlich wird, einen zungenartigen Einführabschnitt 28 auf, der in der in den Figuren 1 und 6 gezeigten Endmontageposition in eine Aufnahme 30, die in Figur 2 deutlich zu erkennen ist, eingreift. Das Verbindungselement 24, das ebenso wie der Kopplungsabschnitt 26, im Querschnitt U-förmig ausgebildet ist, weist einen Rücken 32 und zwei Schenkel 34 auf. Die Aufnahme 30 ist im Rücken 32 des Verbindungselements 24 vorgesehen. An den Schenkeln 34 des Verbindungselements 24 ist eine sich in Querrichtung erstreckende Lageraufnahme 36 für einen Lagerbolzen 38 vorgesehen. Aufgrund der Lageraufnahme 36, beziehungsweise des Lagerbolzens 38, wird eine pendelnde Anordnung des Verbindungselements 24 gegenüber dem Reiterelement 22 erreicht. Um eine gewisse Flexibilität der Schenkel 34 bei ausreichender Steifigkeit zu erreichen, sind die Schenkel 34 doppelwandig ausgeführt.

Wie ebenfalls aus Figur 2 deutlich wird, weist das Verbindungselement 24 auf seiner in Längsrichtung der Einführöffnung 30 abgewandten Seite an den Schenkeln 24 jeweils eine sich in Längsrichtung erstreckende, in Querrichtung elastisch nachgiebige Rastzunge 40 auf. Die Rastzungen 40 umfassen jeweils eine Rastkante 42 und einen Betätigungsabschnitt 44. Der Bereich des Verbindungselements 24, der in der Endmontageposition von dem Kopplungsabschnitt 26 abgedeckt wird, liegt gegenüber den restlichen Bereichen des Verbindungselements 24, die im Wesentlichen von den beiden Betätigungsabschnitten 24 und einem in axialer Verlängerung des Kopplungsabschnitts liegenden Kopfabschnitt 46 gebildet sind, zurückversetzt. Dadurch wird erreicht, dass in der Endmontageposition der Kopplungsabschnitt 26 und das Verbindungselement 24 eine weitgehend geschlossene und weitgehend glatte Oberfläche bilden.

Wie aus der Figur 3 deutlich wird, ist der mit dem Einführabschnitt 28 zusammenwirkende, an die Einführöffnung 30 angrenzende Bereich 48 komplementär zum Einführabschnitt 28 ausgebildet. Der Einführabschnitt 28 ist, wie aus den Figuren 4 und 5 deutlich wird, in Richtung der Verlängerung des Wischarms 14 und in Seitenansicht in Richtung der zu wischenden Scheibe bogenartig ausgebildet. Entsprechend ist, wie den Figuren 3 und 5 entnommen werden kann, der Bereich 48 ebenfalls bogenartig, beziehungsweise kreissegmentartig, ausgebildet.

Aus Figur 4 wird deutlich, dass der Kopplungsabschnitt im Querschnitt U-förmig ausgebildet ist und einen Rücken 50 und sich an den Rücken anschließende Schenkel 52, 54 aufweist. Der Einführabschnitt 28 ist dabei in Verlängerung des Rückens 50 freistehend angeordnet. An den Schenkeln 52, 54 sind Rastkanten 56 vorgesehen, die mit der Längsachse 58 des Wischarms 14, einen Winkel β im Bereich von ca. 70° einschließen (vergl. Figuren 5 und 6). Die Rastkanten 42 der Rastzungen 40 schließen einen entsprechenden Winkel β ein. In der Endmontageposition gemäß Figur 6 liegen die Rastkanten 42 der Rastzungen 40 an den Rastkanten 56 der Schenkel 52, 54 des Kopplungsabschnitts 26 an.

Den Figuren 2 und 5 kann entnommen werden, dass die dem Rücken 50 des Kopplungsabschnitts 26 zugewandten Seiten 60 der Rastzungen 40 leicht angeschrägt sind. Entsprechend sind die der Scheibe zugewandten, beim Verschwenken in die Endmontageposition mit den Seiten 60 der Kopplungsabschnitte 26 zusammenwirkenden Seiten 62 der Schenkel des Kopplungsabschnitts 26 ebenfalls leicht angeschrägt.

Zur Montage des Kopplungsabschnitts 26 mit dem Verbindungselement 24 wird zur Erreichung einer Vormontageposition, die in der Figur 5 dargestellt ist, der Einführabschnitt 28 weitgehend geradlinig entlang des Pfeiles 64 in die Aufnahme 30 eingeführt. In dieser Vormontageposition schließt die Längsachse des Wischarms 14 und die Längsachse des Verbindungselements 24 beziehungsweise des Wischblatts 12 einen Winkel α ein, der im Bereich von ca. 10 bis 100° liegen kann. Bei dem in der Figur 5 dargestellten Ausführungsbeispiel weist der Winkel α einen Wert von ca. 40° auf. Zur Erreichung der Endmontageposition, die in Figur 1 und Figur 6 dargestellt ist, werden der Wischarm 14 und der Verbindungsabschnitt 24 um den Kontaktbereich 66, in dem der Einführabschnitt 28 an dem Bereich 48 der Aufnahme 30 anliegt, aufeinander zu verschwenkt. Aufgrund der komplementären Ausbildung des Einführabschnitts 28 und des Bereichs 48 wird der Schwenkvorgang bedingt geführt. Kurz vor Erreichen der Endmontageposition treffen die angeschrägten Seiten 62 des Kopplungsabschnitts 26 und die entsprechend angeschrägten Seiten 60 der Rastzungen 40 derart aufeinander, dass die Rastzungen 40 in einander zugewandter Richtung elastisch ausgelenkt werden. Bei Erreichen der Endmontageposition hinterschnappen die Rastzungen 40 in einander abgewandten Richtungen die Rastkanten 56 der Schenkel 52, 54 des Kopplungsabschnitts 26. Dadurch wird der Kopplungsabschnitt 26 in der Endmontageposition am Verbindungselement 24 dauerhaft gehalten. In der Endmontageposition liegt der Kopplungsabschnitt 28 großflächig am Bereich 48 des Verbindungselements 24 an. Ferner liegt die dem Kopfbereich 46 des Verbindungselements 24 zugewandte Stirnseite 68 des Kopplungsabschnitts 26 an einer mit ihr korrespondierenden Anlagekante 70 des Verbindungselements an.

Aufgrund der nicht senkrecht zur Wischblattlängsachse, sondern mit der Längsachse einen spitzen Winkel β einschließenden Rastkanten 42, 56 wird erreicht, dass im montierten Zustand der Kopplungsabschnitt 26 in Richtung des Kopfabschnitts 46 beaufschlagt wird. Dadurch ergibt sich eine spielfreie Verbindung in axialer Richtung. Außerdem wird durch die schräg angeordneten Rastkanten 42, 56 der Kopplungsabschnitt 26 in Richtung des Wischblatts 12 beaufschlagt, wodurch eine spielfreie Verbindung in zum Wischblatt senkrechter Richtung realisiert wird. Der Einführabschnitt 28 liegt dabei unter geringer Vorspannung an dem Kontaktbereich 48 des Verbindungselements 24 an.

Zu Lösen der Verbindung werden die Betätigungsabschnitte 44 in einander zugewandter Richtung zusammengedrückt. Dadurch gelangen die Rastkanten 42 der Rastzungen 40 aus dem Eingriffsbereich der Rastkanten 56 des Kopplungsabschnitts 26. Da die Betätigungsabschnitte einander gegenüberliegend angeordnet sind, kann das Zusammendrücken der Betätigungsabschnitte 44 durch einen einfachen Handgriff, mittels einer Hand, bewerkstelligt werden. Der Kopplungsabschnitt 26 wird dann vom Verbindungselement 24 weggeschwenkt, bis zirka die in der Figur 5 erreichte Vormontageposition erreicht ist. Anschließend wird der Einführabschnitt 28 aus der Aufnahme 30 in der dem Pfeil 64 entgegengesetzten Richtung herausgeführt.

Wie in der Figur 5 deutlich zu erkennen ist, kann vorgesehen sein, dass die Schenkel 34 des Verbindungselements auf der der Scheibe zugewandten Seite nasenartige Erhebungen 72 aufweisen. Diese dienen zur Abstützung am Reiterelement 22. Die Erhebungen 22 schränken den Pendelbereich des Verbindungselements 24 gegenüber dem Reiterelement 22 bedingt ein. Hierdurch wird eine erleichterte Montage und Demontage des Wischblatts 12 vom Wischarm 14 möglich.

Im gebogenen Bereich des Einführabschnitts 28 ist eine Materialaussparung in Form eines kreiszylindrischen Loches 74 vorgesehen.

Um zu verhindern, dass das Wischblatt, das auf seiner der Wischleiste 16 abgewandten Seite einen spoilerartigen Ansatz 76 aufweist, an den falschen Wischarm montiert werden kann, kann an dem Verbindungselement 24 und an dem Kopplungsabschnitt 26 eine Codierung vorgesehen sein. Eine derartige Codierung kann beispielsweise durch eine abgeschrägte Ecke 78 am Schenkel 54 des Kopplungsabschnitts 26 realisiert sein, was in Figur 4 entsprechend dargestellt ist. Die abgeflachte Ecke 78 kann hierbei mit einem in den Figuren nicht dargestellten, komplementär ausgebildeten Materialauftrag an der entsprechenden Stelle des Verbindungselements 24 korrespondieren. Da lediglich eines von beiden Wischblättern, das jeweils rechte oder jeweils linke Wischblatt, einen entsprechenden Materialauftrag am Verbindungselement vorsieht, wird eine eindeutige Zuordnung des rechten beziehungsweise linken Wischblatts zu dem rechten beziehungsweise linken Wischarm gewährleistet.

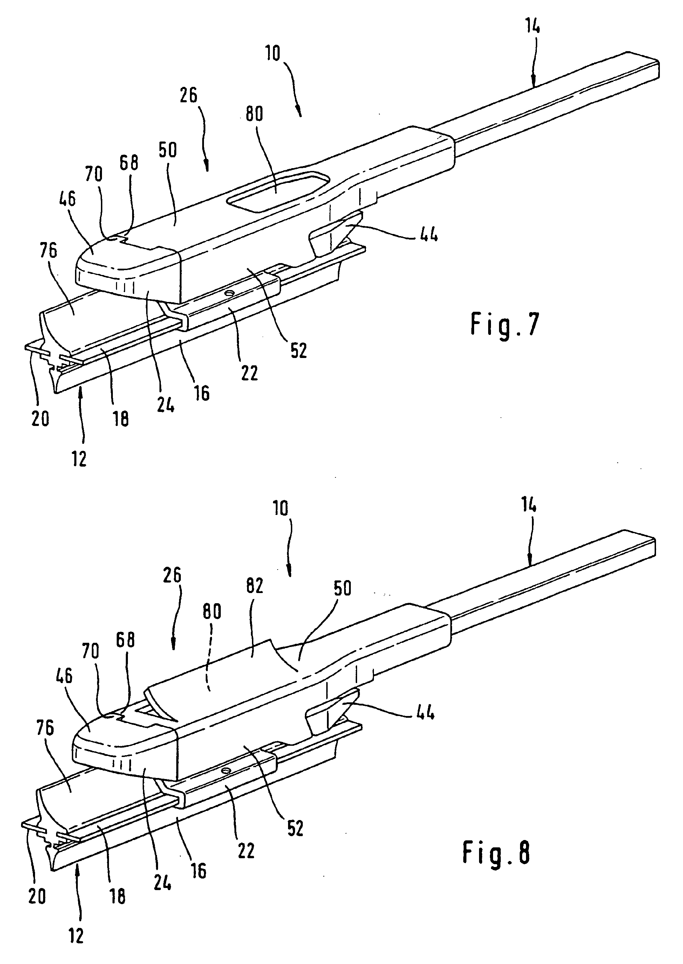

Für das in Figur 7 dargestellte Ausführungsbeispiel gilt generell die gleiche vorstehende Beschreibung zu dem in den Figuren 1 bis 6 dargestellten ersten Ausführungsbeispiel. Deshalb wurden in Figur 7 auch die gleichen Bezugszeichen wie in Figur 1 benutzt.
Der wesentlichen Unterschied des Ausführungsbeispiels gemäß Figur 7 besteht darin, dass im Rücken 50 des zu dem Wischarm 14 gehörenden Kopplungsabschnittes 26 zusätzlich eine Öffnung 80 vorgesehen ist. Diese Öffnung 80 erlaubt, dass unter das U-Profil des Kopplungsabschnittes strömende Luft auf relativ kurzem Weg den unter dem U-Profil gebildeten Raum verlassen kann, indem sie die Öffnung 80 durchströmt. Auf diese Weise wird der Staudruck unterhalb des Kopplungsabschnittes 26 gegenüber einer Ausführung ohne die Öffnung 80 verringert, was zur vergleichsweisen Verringerung der Abhebekraft des Wischarmes 14 bei Anströmung führt.

Anstelle der einen Öffnung 80 könnten auch mehrere Öffnungen 80 in dem Kopplungsabschnitt 26 vorgesehen sein, wobei eine oder mehrere Öffnungen 80 auch in einem der beiden Schenkel 52, 54 oder in beiden Schenkeln 52, 54 angebracht sein können. Die Größe, die Form und die Position der einen oder mehreren Öffnungen 80 sollte im Hinblick auf einen größtmöglichen Wirkungseffekt in Abhängigkeit von den geometrischen Gegebenheiten der einzelnen Bestandteile der Vorrichtung 10 bzw. der Vorrichtung 10 insgesamt optimiert werden. Ebenso können Form und Größe der einen oder mehreren Öffnungen 80 dem Design des Kopplungsabschnittes 26 angepasst sein.

Auch für das in Figur 8 dargestellte, weitere Ausführungsbeispiel gilt generell die gleiche vorstehende Beschreibung zu dem in den Figuren 1 bis 6 dargestellten ersten Ausführungsbeispiel.
Der wesentlichen Unterschied des Ausführungsbeispiels gemäß Figur 8 besteht darin, dass am Rücken 50 des Kopplungsabschnittes 26 ein spoilerartiges Luftleitmittel 82 ausgebildet ist. Zur Herstellung des Luftleitmittels 82 wurde aus dem Rücken 50 des Kopplungsabschnittes 26 ein etwa rechteckiger Abschnitt, der in Längsrichtung des Kopplungsabschnittes 26 orientiert ist, an seinen zwei Schmalseiten und an einer Längsseite freigeschnitten bzw. freigestanzt und nach oben aus der Ebene des Rückens 50 herausgebogen. Dabei kann dem Luftleitmittel 82 eine gerundete, flügelartige Form gegeben werden. Das Luftleitmittel 82 ist an seiner der anströmenden Luft zugewandten Längsseite mit dem Rücken 50 verbunden. Durch das Herausbiegen wurde hinter dem Luftleitmittel 82 gleichzeitig die Öffnung 80 im Rücken 50 gebildet, welche von einem Luftstrom durchströmt werden kann. In der Figur 8 ist die zum Bezugszeichen 80 gehörende Bezugslinie gestrichelt gezeichnet, weil die Sicht auf die Öffnung 80 in dieser Perspektive durch das Luftleitmittel 82 verdeckt ist. Das Luftleitmittel 82 und die Öffnung 80 können wirtschaftlich günstig durch Stanzen und Biegen während des Herstellungsprozesses des Kopplungsabschnittes als Stanz-Biege-Teil aus Blech erzeugt werden.

Die aerodynamischen Vorteile einer derartigen Ausführung ergeben sich einmal aus der durch das Luftleitmittel 82 erzeugten Anpresskraft, die auf den Wischarm 14 wirkt, und zum anderen aus der Verringerung des Staudruckes unterhalb des U-Profiles des Kopplungsabschnittes 26.

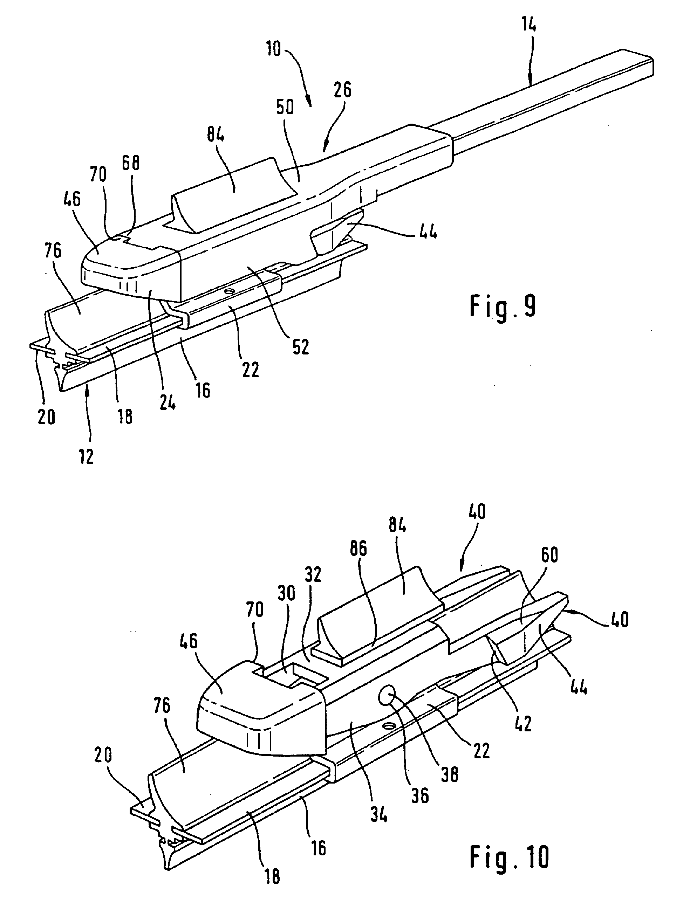

Die Besonderheit des Ausführungsbeispiels gemäß Figuren 9 und 10 besteht darin, dass im Rücken 50 des Kopplungsabschnittes 26 eine Öffnung vorgesehen ist und dass ein am Rücken 32 des Verbindungselementes 24 angeordnetes spoilerartiges Luftleitmittel 84 durch diese Öffnung hindurch bis an die Oberseite des Kopplungsabschnittes 26 reicht. Bei Anströmung des Luftleitmittels 84 wird die Anpresskraft des Wischarmes 14 erhöht bzw. die Abhebekraft verringert.

In Figur 9 ist zu sehen, dass die Form und die Größe der Öffnung im Kopplungsabschnitt 26 und der Grundfläche des Luftleitmittels 84 aneinander angepasst sind. Außerdem ist das Luftleitmittel 84 über einen Sockel 86 mit dem Rücken 32 des Verbindungselementes 24 verbunden. Die Höhe des Sockels 86 entspricht der Wanddicke des Rückens 50 des Kopplungsabschnittes 26, so dass die Oberseite des Rückens 50 zumindest nahezu spaltfrei bzw. absatzlos an das Luftleitmittel 84 angrenzt. Dadurch wird die Aerodynamik verbessert, und Strömungsgeräusche werden verringert.

Abweichend von der Darstellung in den Figuren 9 und 10 kann vorteilhaft auch die Öffnung im Rücken 50 des Kopplungsabschnitts 26 größer sein als die Grundfläche des Luftleitmittels 84 bzw. dessen Sockels 86. In diesem Fall wäre nur ein Teil der Öffnung von dem Luftleitmittel 84 ausgefüllt. Der nicht ausgefüllte Teil der Öffnung wirkt somit als Durchstromöffnung, womit wiederum der Staudruck unter dem U-Profil des Kopplungsabschnittes 26 verringert wird. Diese Ausführung ist in der Zeichnung nicht dargestellt.

Eine weitere in der Zeichnung nicht dargestellte Ausführung besteht darin, dass bei einer Vorrichtung gemäß Figuren 9 und 10 zusätzlich wenigstens eine Öffnung im Rücken und/oder in wenigstens einem der Schenkel 52, 54 zum Abbau des Staudruckes unter dem U-Profil des Kopplungsabschnittes 26 vorgesehen ist.

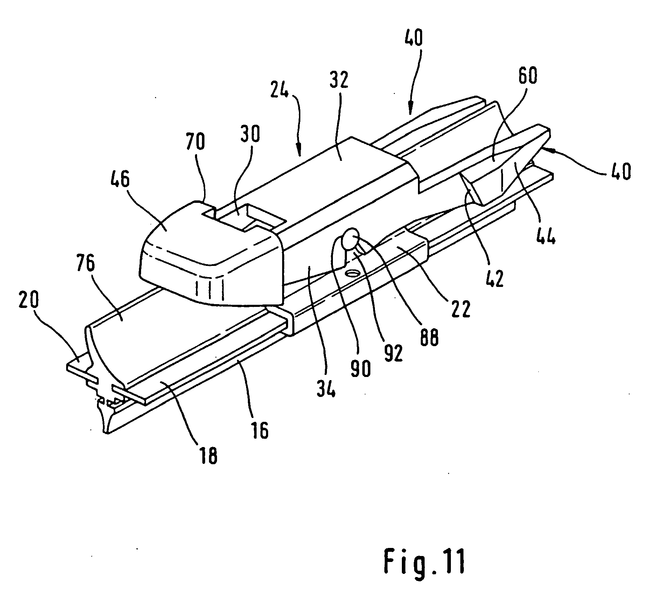

Ein letztes Ausführungsbeispiel ist in Figur 11 gezeigt. Dieses Ausführungsbeispiel entspricht in sehr vielen Merkmalen der in Figur 2 gezeigten Ausführung, weshalb der grundsätzliche Aufbau hier nicht noch einmal wiederholt wird und für gleiche Teile bzw. Elemente die gleichen Bezugszahlen verwendet werden.

Bei dem Ausführungsbeispiel gemäß Figur 11 weist das Reiterelement 22 zwei fluchtend zueinander angeordnete Lagerzapfen 88 auf, die quer zur Längsrichtung des Wischblattes 12 von dem Reiterelement 22 abstehen. Die Lagerzapfen 88, von denen auf Grund der Perspektive in Figur 11 nur einer zu sehen ist, sind einstückig mit dem Reiterelement 22 ausgebildet. Das Reiterelement 22 ist vorteilhaft insgesamt als Metall-Druckgußteil oder als Kunststoffspritzgußteil zu fertigen.

In den beiden Schenkeln 34 des im Querschnitt im wesentlichen ein U-Profil aufweisenden Verbindungselements 24 sind miteinander fluchtende Lagerbohrungen 90 ausgebildet, von denen auf Grund der Perspektive in der Figur 11 wiederum nur eine zu sehen ist. Die Lagerbohrungen 90 sind so an die Lagerzapfen 88 angepasst, dass ein möglichst spielfreies Verschwenken des Reiterelements 22 relativ zu dem Verbindungselement 24 erfolgen kann. Ein wesentlicher Unterschied zu der Ausführung gemäß Figur 2 besteht nun darin, dass die Lagerbohrungen 90 jeweils über einen von der Lagerbohrung 90 zu dem unteren, d. h. dem Rücken 32 des Verbindungselementes 24 entgegengesetzten, Rand des Schenkels 34 verlaufenden Schlitz 92 radial geöffnet sind. Der Schlitz 92 erweitert sich dabei ausgehend von dem Rand der Lagerbohrung 90 zu dem Rand des Schenkels 34 hin. Die Engstelle des Schlitzes 92 ist dabei schaler als der Durchmesser des jeweiligen Lagerzapfens 88. Bei der Montage oder Demontage von Reiterelement 22 und Verbindungselement 24 werden die Lagerzapfen 88 in der Art einer Rastverbindung unter Überwindung der Engstelle radial durch die Schlitze 92 hindurch in die Lagerbohrungen 90 hinein oder aus diesen heraus gedrückt. Dadurch werden diese Prozesse wesentlich vereinfacht, andererseits ist ein ausreichend sicherer Sitz oder Halt der Lagerzapfen 88 in den Lagerbohrungen 90 gewährleistet.

Normalerweise erfolgt das Verbinden eines mit einem solchen Reiterelement 22 und einem solchen Verbindungselement 24 versehenen Wischblattes 12 an einem Wischarm 14 bzw. dem Kopplungsabschnitt 26 eines Wischarmes 14 als auch umgekehrt dessen Entfernen in der gleichen generellen Art, wie es im Zusammenhang mit den Figuren 1 bis 6 beschrieben worden ist. Bei der Ausführung gemäß Figur 11 besteht aber auch die Möglichkeit, zuerst das von dem Wischblatt 12 separiert vorliegende Verbindungselement 24 im Sinne dieser generellen Art am Kopplungsabschnitt 26 des Wischarmes 14 anzubringen und danach das mit dem Wischblatt 12 verbundene Reiterelement 24 an dem Verbindungselement 24 zu montieren, indem man die Lagerzapfen 88 radial durch die Schlitze 92 in die Lagerbohrungen 90 eindrückt. Es ist auch denkbar, eine Demontage in umgekehrter Reihenfolge dieser zuletzt angegebenen Schritte durchzuführen.

Vorrichtungen zum lösbaren Verbinden eines Wischblattes mit einem Wischarm entsprechend den Ausführungsbeispielen gemäß den Figuren 1 bis 10 sind insbesondere für die Verwendung in Wischanlagen für Frontscheiben von Fahrzeugen geeignet, während die Vorrichtung entsprechend dem Ausführungsbeispiel gemäß Figur 11 insbesondere für die Verwendung in Wischanlagen für Heckscheiben von Fahrzeugen geeignet ist.

Sämtliche in der Beschreibung, den Zeichnungen und den Ansprüchen zu entnehmenden Merkmale können sowohl einzeln, als auch in beliebiger Kombination miteinander erfindungswesentlich sein.

## Patentansprüche

1. Vorrichtung (10) zum lösbaren Verbinden eines Wischblatts (12) mit einem antreibbaren Wischarm (14), wobei das Wischblatt (12) eine der zu wischenden Scheibe zugewandte Wischleiste (16), wenigstens ein bandartig langgestrecktes Tragelement (18, 20), ein mit dem Tragelement (18, 20) verbundenes Reiterelement (22), und ein an dem Reiterelement (22) pendelbar gelagertes Verbindungselement (24) zum Anschließen an einen Kopplungsabschnitt (26) des Wischarms umfasst, **dadurch gekennzeichnet, dass** der Kopplungsabschnitt (26) einen zungenartigen Einführabschnitt (28) aufweist, dass das Verbindungselement (24) eine Aufnahme (30) für den Einführabschnitt (28) aufweist und dass der Kopplungsabschnitt (26) und das Verbindungselement (24) Sicherungsabschnitte (42, 56) zur gegenseitigen dauerhaften Verbindung aufweisen,
wobei zur Erreichung einer Vormontageposition, in der die Längsachse des Wischarms (14) und die Längsachse des Verbindungselements (24) einen Winkel α im Bereich von ca. 10° bis 100° einschließen, der Einführabschnitt (28) weitgehend geradlinig (64) in die Aufnahme (30) einführbar ist, und
wobei zur Erreichung einer Endmontageposition der Wischarm (14) und der Verbindungsabschnitt (24) um den Kontaktbereich Einführabschnitt/Aufnahme aufeinander zu verschwenkbar sind, bis die Sicherungsabschnitte (40, 42, 56) eine gegenseitige dauerhafte Verbindung ermöglichen.

2. Vorrichtung (10) nach Anspruch 1, **dadurch gekennzeichnet, dass** die Einführrichtung (64) zur Erreichung der Vormontageposition in der Schwenkebene zur Erreichung der Endmontageposition liegt.

3. Vorrichtung (10) nach Anspruch 1 oder 2, **dadurch gekennzeichnet, dass** der Kopplungsabschnitt (26) im Querschnitt U-förmig ausgebildet ist und einen Rücken (50) und zwei Schenkel (52, 54) umfasst, wobei der Einführabschnitt (28) hakenartig ausgebildet und am Rücken (50) des Kopplungsabschnitts (26) angeordnet ist.

4. Vorrichtung (10) nach Anspruch 3, **dadurch gekennzeichnet, dass** der Einführabschnitt (28) am freien Ende, in Richtung der Verlängerung des Wischarms (14) und in Seitenansicht in Richtung der zu wischenden Scheibe derart bogenartig ausgebildet ist, dass er den Rücken (50) nicht überragt.

5. Vorrichtung (10) nach einem der vorhergehenden Ansprüche, **dadurch gekennzeichnet, dass** der mit dem Einführabschnitt (28) zusammenwirkende, an die Einführöffnung (30) angrenzende Bereich (48) des Verbindungselements (24) komplementär zum Einführabschnitt (28) ausgebildet ist.

6. Vorrichtung (10) nach einem der vorhergehenden Ansprüche, **dadurch gekennzeichnet, dass** der mit dem Einführabschnitt (28) zusammenwirkende Bereich (48) des Verbindungselements (24) und des Einführabschnitts (28) im Längsschnitt bogenartig, und insbesondere kreissegmentartig, ausgebildet sind.

7. Vorrichtung (10) nach einem der vorhergehenden Ansprüche, **dadurch gekennzeichnet, dass** das Verbindungselement (24) im Querschnitt U-förmig ausgebildet ist und einen Rücken (32) und zwei Schenkel (34) umfasst.

8. Vorrichtung (10) nach Anspruch 7, **dadurch gekennzeichnet, dass** die Einführöffnung (30) als Aussparung am Rücken (32) ausgebildet ist.

9. Vorrichtung (10) nach einem der vorhergehenden Ansprüche, **dadurch gekennzeichnet, dass** in der Endmontageposition (Figur 6) der Kopplungsabschnitt (26) das Verbindungselement (24) wenigstens abschnittsweise abdeckt.

10. Vorrichtung (10) nach einem der vorhergehenden Ansprüche, **dadurch gekennzeichnet, dass** die Sicherungsabschnitte als Rastabschnitte (40, 42, 56) ausgebildet sind.

11. Vorrichtung (10) nach einem der vorhergehenden Ansprüche, **dadurch gekennzeichnet, dass** das Verbindungselement (24) auf seiner in Längsrichtung der Einführöffnung (30) abgewandten Seite an den Schenkeln (34) jeweils eine sich in Längsrichtung erstreckende, in Querrichtung elastisch nachgiebige Rastzunge (40) aufweist, die mit an den Schenkeln (52, 54) des Kopplungsabschnitts (26) vorgesehenen Rastkanten (42, 56) zusammenwirken.

12. Vorrichtung (10) nach Anspruch 11, **dadurch gekennzeichnet, dass** die Rastkanten (42) der Rastzungen (40) und die Rastkanten (56) der Schenkel (34) mit der Längsachse einen spitzen Winkel (β), insbesondere einen Winkel in Bereich von ca. 30° bis 80°, einschließen.

13. Vorrichtung (10) nach Anspruch 11 oder 12, **dadurch gekennzeichnet, dass** an den freien Enden der Rastzungen (40) Betätigungsabschnitte(44) zum Lösen der Rastverbindung vorgesehen sind.

14. Vorrichtung (10) nach Anspruch 11, 12 oder 13, **dadurch gekennzeichnet, dass** die dem Rücken (50) des Kopplungsabschnitts (26) zugewandten Seiten (60) der Rastzungen (40) zur leichteren Verrastung entsprechend angeschrägt sind.

15. Vorrichtung (10) nach einem der Ansprüche 11 bis 14, **dadurch gekennzeichnet, dass** die der Scheibe zugewandten Seiten der Schenkel (52, 54) des Kopplungsabschnitts (26) zur leichteren Verrastung entsprechend angeschrägt sind.

16. Vorrichtung (10) nach einem der vorhergehenden Ansprüche, **dadurch gekennzeichnet, dass** das Verbindungselement (24) und der Kopplungsabschnitt (26) eine Codierung aufweist.

17. Vorrichtung (10) nach einem der vorhergehenden Ansprüche, **dadurch gekennzeichnet, dass** die Schenkel (34) des Verbindungselements (24) als doppelwandige Schenkel ausgebildet sind.

18. Vorrichtung (10) nach einem der vorhergehenden Ansprüche, **dadurch gekennzeichnet, dass** das Verbindungselement (24) zwischen den Schenkeln (34) einen Gelenkbolzen (38) aufweist, der zur pendelbaren Anordnung des Verbindungselements (24) in einer Lagerung (36) am Reiterelement (22) gelagert ist.

19. Vorrichtung (10) nach einem der Ansprüche 1 bis 17, **dadurch gekennzeichnet, dass** das Reiterelement (22) einen mit seinen Enden von dem Reiterelement (22) abragenden Lagerbolzen bzw. alternativ dazu zwei Gelenkzapfen (88) aufweist, auf denen das Verbindungselement (24) mit in seinen Schenkeln (34) ausgebildeten korrespondierenden und fluchtend angeordneten Lagerbohrungen (90) verschwenkbar gelagert ist.

20. Vorrichtung (10) nach Anspruch 19, **dadurch gekennzeichnet, dass** die in den Schenkeln (34) des Verbindungselementes (24) vorgesehenen Lagerbohrungen (90) über jeweils einen radial zu der Lagerbohrung verlaufenden Schlitz (92) geöffnet sind.

21. Vorrichtung nach Anspruch 20, **dadurch gekennzeichnet, dass** die Schlitze (92) von der Lagerbohrung (90) zu dem Rand des Schenkels (34) verlaufen, welcher dem Rücken (32) des Verbindungselementes (24) gegenüber liegt.

22. Vorrichtung nach Anspruch 20 oder 21, **dadurch gekennzeichnet, dass** sich jeweils der Schlitz (92) ausgehend von der Lagerbohrung (90) zum Rand des Schenkels (34) hin erweitert, wobei die engste Stelle des Schlitzes (92) kleiner ist als der Durchmesser des Lagerbolzens bzw. der alternativen Lagerzapfen (88).

23. Vorrichtung (10) nach einem der vorhergehenden Ansprüche, **dadurch gekennzeichnet, dass** die Schenkel (34) des Verbindungselements (24) auf der der Scheibe zugewandten Seite nasenartige Erhebungen (72) aufweisen.

24. Vorrichtung (10) nach einem der vorhergehenden Ansprüche, **dadurch gekennzeichnet, dass** in der Endmontageposition (Figur 6) der Kopplungsabschnitt (26) und das Verbindungselement (24) eine weitgehend geschlossene, weitgehend stetige und weitgehend glatte Oberfläche aufweisen.

25. Vorrichtung (10) nach einem der vorhergehenden Ansprüche, **dadurch gekennzeichnet, dass** der Kopplungsabschnitt (26) des Wischarmes (14) wenigstens eine zur Luftdurchströmung geeignete Öffnung (80) aufweist.

26. Vorrichtung (10) nach Anspruch 25, **dadurch gekennzeichnet, dass** die wenigstens eine Öffnung (80) im Rücken (50) des Kopplungsabschnittes (26) vorgesehen ist.

27. Vorrichtung (10) nach einem der vorhergehenden Ansprüche, **dadurch gekennzeichnet, dass** an dem Kopplungsabschnitt (26) des Wischarmes (14) wenigstens ein spoilerartiges Luftleitmittel (82) vorgesehen ist.

28. Vorrichtung (10) nach Anspruch 27, **dadurch gekennzeichnet, dass** das wenigstens eine Luftleitmittel (82) am Rücken des Kopplungsabschnittes (26) angeordnet ist).

29. Vorrichtung (10) nach Anspruch 28, **dadurch gekennzeichnet, dass** das Luftleitmittel (82) von einem aus dem Rücken (50) des Kopplungsabschnittes (26) freigeschnittenen und spoilerartig nach oben gebogenen Abschnitt gebildet ist.

30. Vorrichtung (10) nach einem der Ansprüche 1 bis 22, **dadurch gekennzeichnet, dass** am Rücken (32) des Verbindungselementes (24) wenigstens ein, vorzugsweise einstückig mit dem Verbindungselement (24) hergestelltes, spoilerartiges Luftleitmittel (84) angeordnet ist und dass dieses wenigstens eine Luftleitmittel (84) durch eine, vorzugsweise korrespondierende, Öffnung im Rücken (50) des Kopplungsabschnittes (26) hindurchragt.

31. Verfahren zur Montage einer Vorrichtung nach einem der vorhergehenden Ansprüche, **dadurch gekennzeichnet, dass** zur Erreichung einer Vormontageposition, in der die Längsachse des Wischarms (14) und die Längsachse des Verbindungselements (24) einen Winkel α im Bereich von ca. 10° bis 100° einschließen, der Einführabschnitt (28) weitgehend geradlinig (64) in die Aufnahme (30) eingeführt wird, und
dass zur Erreichung einer Endmontageposition der Wischarm (14) und der Verbindungsabschnitt (24) um den Kontaktbereich Einführabschnitt/Aufnahme aufeinander zu verschwenkt werden, bis die Sicherungsabschnitte (40, 42, 56) eine gegenseitige dauerhafte Verbindung eingehen.

## Claims

1. Device (10) for detachably connecting a wiper blade (12) with a drivable wiper arm (14), with the wiper blade (12) having a wiping strip (16) facing the screen to be wiped, at least one strip-like elongated carrier element (18, 20), a slider element (22) connected to the carrier element (18, 20) and an oscillatably mounted connecting element (24) on the slider element for connection to a coupling section (26) of the wiper arm, **characterised in that** the coupling section (26) has a tongue-like insertion section(28), the connecting element (24) has a receptacle (30) for the insertion section (28) and the coupling section (26) and the connecting element (24) have securing sections (42, 56) for mutual permanent connection, wherein in order to achieve a preinstallation position in which the longitudinal axis of the wiper arm (14) and the longitudinal axis of the connecting element (24) form an angle α in the range of approx. 10° to 100°, the insertion section (28) can be broadly linearly (64) inserted into the receptacle (30) and wherein in order to achieve a final installation position the wiper arm (14) and the connecting section (24) are pivoted towards each other around the contact area between the insertion section/receptacle until the securing sections (40, 42, 56) allow a mutually permanent connection.

2. Device (10) according to claim 1, **characterised in that** the insertion device (64) lies in the pivoting plane for achievement of the final installation position in order to achieve the preinstallation position.

3. Device (10) according to claim 1 or 2, **characterised in that** the coupling section (26) is designed with a U-shaped cross section and comprises a back (50) and two sides (52, 54), with the insertion section (28) being designed in the manner of a hook and arranged on the back (50) of the coupling section (26).

4. Device (10) according to claim 3, **characterised in that** the insertion section (28) on the free end, in the direction of the extension of the wiper arm (14) and in the side view in the direction of the screen to be wiped, is designed in the form of an arc in such a way that it does not project over the back (50).

5. Device (10) according to one of the above claims, **characterised in that** the area (48) of the connecting element (24) interacting with the insertion section (28) and adjacent to the insertion opening (30) is designed complementary to the insertion section (28).

6. Device (10) according to one of the above claims, **characterised in that** the area (48) of the connecting element (24) interacting with insertion element (28) and the insertion section (28) are designed in the form of an arc and particularly a segmented circle in the longitudinal section.

7. Device (10) according to one of the above claims, **characterised in that** the connecting element (24) is U-shaped in cross section and comprises a back (32) and two sides (34).

8. Device (10) according to claim 7, **characterised in that** the insertion opening (30) is designed as a notch on the back (32).

9. Device (10) according to one of the above claims, **characterised in that** in the final installation position (figure 6), the coupling section (26) covers the connecting element (24) at least in sections.

10. Device (10) according to one of the above claims, **characterised in that** the safety sections are designed as locking sections (40, 42, 56).

11. Device (10) according to one of the above claims, **characterised in that** the connecting element (24), on its side facing away from the insertion opening (30) in the longitudinal direction, having on the sides (34) respectively a snap-in pin (40) extending in the longitudinal direction and elastically flexible in the crossways direction, which interact with the locking edges (42, 56) provided on the sides (52, 54) of the coupling section (26).

12. Device (10) according to claim 11, **characterised in that** the locking edges (42) of the snap-in pins (40) and the locking edges (56) of the sides (34) form a sharp angle (β) with the longitudinal axis, particularly an angle in the range of 30° to 80°.

13. Device (10) according to claim 11 or 12, **characterised in that** on the free ends of the snap-in pains (40), operating sections (44) for releasing the catch connection area provided.

14. Device (10) according to claim 11, 12 or 13, **characterised in that** the sides (60) of the snap-in pins (40) facing the back (50) of the coupling section (26) are appropriately bevelled for easier locking.

15. Device (10) according to one of claims 11 to 14, **characterised in that** the faces of the sides (52, 54) of the coupling section (26) facing the windscreen are appropriately bevelled for easier locking.

16. Device (10) according to one of the above claims, **characterised in that** the connecting element (24) and the coupling section (26) have coding.

17. Device (10) according to one of the above claims, **characterised in that** the sides (34) of the connecting element (24) are designed as double-walled sides.

18. Device (10) according to one of the above claims, **characterised in that** the connecting element (24) has a hinge pin (38) between the sides (34), which is mounted in a bearing (36) on the slider element (22) for oscillating arrangement of the connecting element (24).

19. Device (10) according to one of claims 1 to 17, **characterised in that** the slider element (22) has a bearing bolt projecting with its ends from the slider element or alternatively two link pins (88) on which the connecting element (24) with corresponding and aligned bearing orifices (90) located in its sides (34) is mounted in a pivoting fashion.

20. Device (10) according to claim 19, **characterised in that** the bearing orifices (90) provided in the sides (34) of the connecting element (24) are respectively open over a slot (92) running radially to the bearing orifice.

21. Device according to claim 20, **characterised in that** the slots (92) run from the bearing orifice (90) to the edge of the side (34) which lies opposite the back (32) of the connecting element (24).

22. Device according to claim 20 or 21, **characterised in that** the slot (92) respectively widens starting from the bearing orifice (90) to the edge of the side (34), with the narrowest position of the slot (92) being smaller than the diameter of the bearing bolt or the alternative bearing pins (88).

23. Device (10) according to one of the above claims, **characterised in that that** sides (34) of the connecting element (24) have nose-like elevations (72) on the side facing the windscreen.

24. Device (10) according to one of the above claims, **characterised in that** in the final installation position (figure 6) the coupling section (26) and the connecting element (24) have a broadly closed, broadly consistent and broadly smooth surface.

25. Device (10) according to one of the above claims, **characterised in that** the coupling section (26) of the wiper arm (14) has at least one suitable opening (80) for air flow.

26. Device (10) according to claim 25, **characterised in that in that** the at least one opening (80) is provided in the back (50) of the coupling section (26).

27. Device (10) according to one of the above claims, **characterised in that** at least one spoiler-like air conductor (82) is provided on the coupling section (26) of the wiper arm (14).

28. Device (10) according to claim 27, **characterised in that** the at least one air conductor (82) is arranged on the back of the coupling section (26).

29. Device (10) according to claim 28, **characterised in that** the air conductor (82) is formed by a section of the back (80) of the coupling section (26) cut free and bent up in the manner of a spoiler.

30. Device (10) according to one of claims 1 to 22, **characterised in that** at least one spoiler-like air conductor (84), preferably manufactured in one piece with the connecting element (24), is arranged on the back (32) of the connecting element and that this at least one air conductor (84) projects through a, preferably corresponding, opening in the back (50) of the coupling section (26).

31. Method for installing a device according to one of the above claims, **characterised in that** in order to achieve a preinstallation position in which the longitudinal axis of the wiper arm (14) and the longitudinal axis of the connecting element (24) form an angle α in the range of approx. 10° to 100°, the insertion section (28) can be broadly linearly (64) inserted into the receptacle (30) and with in order to achieve a final installation position the wiper arm (14) and the connecting section (24) are pivoted towards each other around the contact area between the insertion section/receptacle until the securing sections (40, 42, 56) allow a mutually permanent connection.

## Revendications

1. Dispositif (10) permettant la liaison amovible d'un balai d'essuie-glace (12) avec un porte-balai entraînable (14), dans laquelle le balai d'essuie-glace (12) comprend une réglette d'essuyage (16) orientée vers la vitre à nettoyer, au moins un élément support (18, 20) étiré en longueur de type bande, un élément cavalier (22) relié à l'élément support (18, 20) et un élément de liaison (24) positionné de manière à osciller sur l'élément cavalier (22), pour le raccordement à un segment de couplage (26) du porte-balai, **caractérisé en ce que** le segment de couplage (26) présente un segment d'insertion (28) en forme de languette, **en ce que** l'élément de liaison (24) présente un logement (30) pour le segment d'insertion (28), et **en ce que** le segment de couplage (26) et le segment de liaison (24) présentent des segments de sécurisation (42, 56) pour une liaison réciproque durable, sachant que, pour atteindre une position de prémontage dans laquelle l'axe longitudinal du porte-balai (14) et l'axe longitudinal de l'élément de liaison (24) forment un angle α dans la plage comprise entre environ 10° et 100°, l'élément d'insertion peut être inséré sensiblement de manière rectiligne (64) dans le logement (30) et, pour atteindre une position de montage finale, le porte-balai (14) et le segment de liaison (24) peuvent pivoter l'un sur l'autre autour la zone de contact segment d'insertion/logement jusqu'à ce que les segments de sécurisation (40, 42, 56) permettent une liaison réciproque durable.

2. Dispositif (10) selon la revendication 1, **caractérisé en ce que** la direction d'insertion (64) permettant d'atteindre la position de prémontage se trouve dans le plan de pivotement permettant d'atteindre la position de montage finale.

3. Dispositif (10) selon la revendication 1 ou 2, **caractérisé en ce que** le segment de couplage (26) est configuré en forme de U en coupe et comporte un dos (50) et deux branches (52, 54), le segment d'insertion (28) étant configuré en forme de crochet et disposé sur le dos (50) du segment de couplage (26).

4. Dispositif (10) selon la revendication 3, **caractérisé en ce que** le segment d'insertion (28) est configuré en forme d'arc sur l'extrémité libre, dans la direction du prolongement du porte-balai (14) et, selon une vue de côté, en direction de la vitre à nettoyer, de telle sorte qu'il ne dépasse pas du dos (50).

5. Dispositif (10) selon l'une quelconque des revendications précédentes, **caractérisé en ce que** la zone (48) adjacente à l'orifice d'insertion (30), coopérant avec le segment d'insertion (28), de l'élément de liaison (24), est configurée de manière complémentaire au segment d'insertion (28).

6. Dispositif (10) selon l'une quelconque des revendications précédentes, **caractérisé en ce que** la zone (48), coopérant avec le segment d'insertion (28), de l'élément de liaison (24) et du segment d'insertion (28), est configurée en forme d'arc, et en particulier de segment de cercle en coupe longitudinale.

7. Dispositif (10) selon l'une quelconque des revendications précédentes, **caractérisé en ce que** l'élément de liaison (24) est configuré en forme de U en coupe et comporte un dos (32) et deux branches (34).

8. Dispositif (10) selon la revendication 7, **caractérisé en ce que** l'orifice d'insertion (30) est configuré sous la forme d'évidement sur le dos (32).

9. Dispositif (10) selon l'une quelconque des revendications précédentes, **caractérisé en ce que**, dans la position de montage finale (figure 6), le segment de couplage (26) recouvre l'élément de liaison (24) au moins par section.

10. Dispositif (10) selon l'une quelconque des revendications précédentes, **caractérisé en ce que** les segments de sécurisation sont configurés sous la forme de segments d'encliquetage (40, 42, 56).

11. Dispositif (10) selon l'une quelconque des revendications précédentes, **caractérisé en ce que** l'élément de liaison (24) présente, sur son côté opposé à l'orifice d'insertion (30) dans la direction longitudinale, sur les branches (34), respectivement des languettes d'encliquetage (40) souple dans la direction transversale, s'étendant dans la direction longitudinale, qui coopèrent avec les arêtes d'encliquetage (42, 56) prévues sur les branches (52, 54) du segment de couplage (26).

12. Dispositif (10) selon la revendication 11, **caractérisé en ce que** les arêtes d'encliquetage (42) des languettes d'encliquetage (40) et les arêtes d'encliquetage (56) des branches (34) forment un angle aigu (β), en particulier un angle dans la plage comprise entre environnement 30° et 80° avec l'axe longitudinal.

13. Dispositif (10) selon la revendication 11 ou 12, **caractérisé en ce qu'**on prévoit, sur les extrémités libres des languettes d'encliquetage (40), des segments d'actionnement (44) permettant d'annuler la liaison par encliquetage.

14. Dispositif (10) selon l'une quelconque des revendications 11, 12 ou 13, **caractérisé en ce que** les côtés (60) orientés vers le dos (50) du segment de couplage (26) des languettes d'encliquetage (40) sont chanfreinés de manière correspondante afin de faciliter l'encliquetage.

15. Dispositif (10) selon l'une quelconque des revendications 11 à 14, **caractérisé en ce que** les côtés orientés vers la vitre des branches (52, 54) du segment de couplage (26) sont chanfreinés de manière correspondante pour faciliter l'encliquetage.

16. Dispositif (10) selon l'une quelconque des revendications précédentes, **caractérisé en ce que** l'élément de liaison (24) et l'élément de couplage (26) présentent un code.

17. Dispositif (10) selon l'une quelconque des revendications précédentes, **caractérisé en ce que** les branches (34) de l'élément de liaison (24) sont configurées sous la forme de branches à double paroi.

18. Dispositif (10) selon l'une quelconque des revendications précédentes, **caractérisé en ce que** l'élément de liaison (24) présente un goujon d'articulation (38) entre les branches (34), qui est positionné dans un logement (36) sur l'élément cavalier (22) afin d'agencer l'élément de liaison (24) de manière à ce qu'il puisse osciller.

19. Dispositif (10) selon l'une quelconque des revendications 1 à 17, **caractérisé en ce que** l'élément cavalier (22) présente un boulon de positionnement dont les extrémités dépassent de l'élément cavalier (22) ou selon une autre solution, deux goujons d'articulation (88), sur lesquels est positionné l'élément de liaison (24) de manière pivotante avec des alésages de positionnement (90) correspondants, ménagés dans ses branches (34) et disposés de manière alignée.

20. Dispositif (10) selon la revendication 19, **caractérisé en ce que** les alésages de positionnement (90) prévus dans les branches (34) de l'élément de liaison (24) sont ouverts respectivement grâce à une fente (92) s'étendant radialement vers l'alésage de positionnement.

21. Dispositif selon la revendication 20, **caractérisé en ce que** les fentes (92) partent de l'alésage de positionnement (90) pour rejoindre le bord de la branche (34), qui se trouve en face du dos (32) de l'élément de liaison (24).

22. Dispositif selon la revendication 20 ou 21, **caractérisé en ce que**, respectivement, la fente (92) s'élargit à partir de l'alésage de positionnement (90) vers le bord de la branche (34), l'endroit le plus étroit de la fente (92) étant plus petit que le diamètre du boulon de positionnement ou des goujons de positionnement (88) alternatifs.

23. Dispositif (10) selon l'une quelconque des revendications précédentes, **caractérisé en ce que** les branches (34) de l'élément de liaison (24) présentent des saillies (72) en forme de nez sur le côté orienté vers la vitre.

24. Dispositif (10) selon l'une quelconque des revendications précédentes, **caractérisé en ce que**, dans la position de montage finale (figure 6), le segment de couplage (26) et l'élément de liaison (24) présentent une surface en grande partie fermée, en grande partie stable et en grande partie lisse.

25. Dispositif (10) selon l'une quelconque des revendications précédentes, **caractérisé en ce que** le segment de couplage (26) du porte-balai (14) présente au moins un orifice (80) approprié pour le passage de l'air.

26. Dispositif (10) selon la revendication 25, **caractérisé en ce que** le au moins un orifice (80) est prévu dans le dos (50) du segment de couplage (26).

27. Dispositif (10) selon l'une quelconque des revendications précédentes, **caractérisé en ce que**, sur le segment de couplage (26) du porte-balai (14), est prévu au moins un moyen déflecteur (82) du type spoiler.

28. Dispositif (10) selon la revendication 27, **caractérisé en ce que** le au moins un moyen déflecteur (82) est disposé sur le dos du segment de couplage (26).

29. Dispositif (10) selon la revendication 28, **caractérisé en ce que** le moyen déflecteur (82) est formé par un segment découpé à partir du dos (50) du segment de couplage (26) et incurvé vers le haut à la manière d'un spoiler.

30. Dispositif (10) selon l'une quelconque des revendications 1 à 22, **caractérisé en ce que**, sur le dos (32) de l'élément de liaison (24), est prévu au moins un moyen déflecteur (84) de type spoiler fabriqué de préférence en une seule pièce avec l'élément de liaison (24), et **en ce que** ce au moins un déflecteur d'air (84) traverse un orifice, de préférence correspondant, dans le dos (50) du segment de couplage (26).

31. Procédé permettant de monter un dispositif selon l'une quelconque des revendications précédentes, **caractérisé en ce que**, pour atteindre une position de prémontage, dans laquelle l'axe longitudinal du porte-balai (14) et l'axe longitudinal de l'élément de liaison (24) forment un angle α dans la plage comprise entre environ 10° et 100°, le segment d'insertion (28) est inséré de manière sensiblement rectiligne (64) dans le logement (30), **en ce que**, pour atteindre une position de montage finale, le porte-balai (14) et le segment de liaison (24) sont amenés à pivoter l'un sur l'autre autour de la zone de contact segment d'insertion/logement jusqu'à ce que les segments de sécurisation (40, 42, 56) assurent une liaison réciproque durable.
